(19) Europäisches Patentamt
European Patent Office
Office européen des brevets

(11) Veröffentlichungsnummer: **0 010 779**
**B1**

(12) # EUROPÄISCHE PATENTSCHRIFT

(45) Veröffentlichungstag der Patentschrift: **04.11.81**

(21) Anmeldenummer: **79200094.5**

(22) Anmeldetag: **26.02.79**

(51) Int. Cl.³: **C 10 L 3/00,** C 07 C 9/04, C 07 C 1/20 // C01B3/32, B01J23/78, B01J23/84

(54) **Verfahren zur Erzeugung von Stadtgas aus Methanol.**

(30) Priorität: **04.03.78 DE 2809447**

(43) Veröffentlichungstag der Anmeldung: **14.05.80 Patentblatt 80/10**

(45) Bekanntmachung des Hinweises auf die Patenterteilung: **04.11.81 Patentblatt 81/44**

(84) Benannte Vertragsstaaten: **CH DE FR IT SE**

(56) Entgegenhaltungen: **DE-A-2 641 113**

(73) Patentinhaber: **METALLGESELLSCHAFT AG, Reuterweg 14 Postfach 3724, D-6000 Frankfurt/M.1 (DE)**

(72) Erfinder: **Jockel, Heinz, Hauptstrasse 67, D-6087 Büttelborn (DE)**
Erfinder: **Möller, Friedrich Wilhelm, Dr., Breslauer Ring 15, D-6382 Friedrichsdorf (DE)**
Erfinder: **Renner, Hans Joachim, An den Bergen 30, D-6000 Frankfurt/Main 56 (DE)**
Erfinder: **Siebert, Gerd, Kohlrauschweg 23, D-6000 Frankfurt/Main 90 (DE)**

(74) Vertreter: **Fischer, Ernst, Dr., Reuterweg 14, D-6000 Frankfurt am Main 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 010 779 B1

# Verfahren zur Erzeugung von Stadtgas aus Methanol

Die Erfindung betrifft ein Verfahren zur Erzeugung eines Heizgases von Stadtgasqualität mit einem Brennwert von weniger als 18 000 kJ/ $Nm^3$ (4300 kcal/$Nm^3$) durch katalytische Umsetzung von Methanol mit Wasserdampf unter einem Druck im Bereich von etwa 10 bis 50 bar. Die Patentanmeldung stellt eine Zusatzanmeldung zu DE-A-2 641 113.2 dar.

Der Einsatz von Methanol als alleiniges Ausgangsmaterial zur Erzeugung von Stadtgas ist für eine Grundlastdeckung trotz der hohen Kosten des Methanols möglich. Methanol ist für die Gaserzeugung gut geeignet, da es auf einfache Weise transportiert und gelagert werden kann. In einem Gasversorgungssystem kommt es deshalb bevorzugt zur Deckung von Spitzenbedarf, z. B. im Winter, in Frage.

Setzt man Methanol und Wasserdampf katalytisch an Nickelkatalysatoren zu heizwertreichem Gas mit einem erheblichen Methangehalt um, so liegt der Brennwert dieses Gases üblicherweise bei 18 000 kJ/$Nm^3$ (4300 kcal/$Nm^3$) oder darüber. Wenn dann ein Stadtgas mit einem niedrigeren Brennwert von weniger als 4300 kcal/$Nm^3$ (18 000 kJ/$Nm^3$) verlangt wird, müssen Verdünnungsgase, z. B. $CO_2$ oder $N_2$, aus fremden Quellen zugemischt werden. Dies kann für das Gasversorgungsunternehmen mit erheblichen und in Relation zum Ergebnis unangemessen hohen Kosten verbunden sein. Nachteilig ist außerdem, daß die Zumischung von Inertgasen wie $CO_2$ oder $N_2$ eine unerwünschte Erhöhung der Dichte des Stadtgases zur Folge hat.

Der Erfindung liegt die Aufgabe zugrunde, das eingangs genannte Verfahren so durchzuführen, daß ohne Fremdgasquellen die gewünschte Stadtgasqualität auf verfahrenstechnisch einfache Weise erzeugt wird. Die Lösung der Aufgabe besteht erfindungsgemäß darin, daß ein Einsatzgemisch, das Wasserdampf und Methanol im Gewichtsverhältnis von etwa 0,5 bis 1,5 enthält, zu 80 bis 95% durch eine erste Reaktionszone bei Temperaturen von 300 bis 700°C geleitet wird, die einen Nickelkatalysator mit 25 bis 50 Gew.-% Nickel als aktiver Komponente enthält und der Rest des Einsatzgemisches zusammen mit dem Produktgas der ersten Reaktionszone durch eine zweite Reaktionszone bei Temperaturen von 200 bis 400°C geleitet wird, die einen Kupferkatalysator mit etwa 40 bis 70 Gew.-% Kupfer enthält.

In der zweiten Reaktionszone laufen unter der Wirkung des Kupferkatalysators im wesentlichen folgende Reaktionen ab:

$$CH_3OH + H_2O \rightarrow CO_2 + 3\,H_2 \text{ und}$$

$$CO + H_2O \rightarrow CO_2 + H_2\,.$$

Das die zweite Reaktionszone verlassende Produktgas weist einen etwas niedrigeren Brennwert pro $Nm^3$ auf als das Produktgas der ersten Reaktionszone, was vor allem auf der selektiven Umsetzung des Methanols mit Wasserdampf zu Wasserstoff und Kohlendioxid beruht. Da die Zusammensetzung des Gases in der zweiten Reaktionszone nur milde geändert wird, läßt sich der für das Stadtgas gewünschte Brennwert sehr genau einstellen.

Es ist zweckmäßig, daß zumindest der durch die erste Reaktionszone zu leitende Teil des Einsatzgemisches aus Wasser und Methanol kalt gemischt und durch Wärmeaustausch auf etwa 300 bis 500°C erhitzt wird, bevor er in die erste Reaktionszone geleitet wird. Dadurch, daß man das Einsatzgemisch aus den noch flüssigen Komponenten herstellt, ergibt sich eine einfachere Handhabung bei der nachfolgenden Erhitzung und Einspeisung in die katalytische Umsetzung. Der Rest des Einsatzgemisches, der nur durch die zweite Reaktionszone geleitet wird, kann aus dem auf etwa 300 bis 500°C erhitzten Gemisch genommen werden. Es ist aber auch möglich, dieses restliche Einsatzgemisch nicht zu erhitzen und es kalt in das Produktgas der ersten Reaktionszone einzuspritzen, um auf diese Weise das der zweiten Reaktionszone aufzugebende Gemisch zu erzeugen.

Zweckmäßigerweise wird das Produktgas der ersten Reaktionszone auf Temperaturen von etwa 250 bis 350°C gekühlt, bevor man es mit dem Rest des Einsatzgemisches mischt. Die Kühltemperaturen können höher gewählt werden, wenn man den Rest des Einsatzgemisches flüssig zugibt und dem Gas dadurch einiges an Verdampfungswärme entzieht.

Für die Umsetzung in der ersten Reaktionszone können für die dort beabsichtigte Umwandlung an sich bekannte Nickelkatalysatoren verwendet werden.

Eine Verbesserung der katalytischen Umsetzung von Methanol mit Wasserdampf wird durch einen speziellen Katalysatortyp erreicht. Dieser Katalysatortyp weist einen Nickelgehalt von 25 bis 50 Gew.-% auf und enthält zusätzlich Tonerdeschmelzzement. Der Gehalt an diesem Zement liegt bei etwa 5 bis 40 Gew.-%. Neben diesen Hauptbestandteilen kann das Trägermaterial des Katalysators auch noch Zirkondioxid und/oder Titandioxid aufweisen. Ist einer der beiden oxidischen Bestandteile im Katalysator vorhanden, dann beträgt sein Anteil mindestens 5 Gew.-%.

Eine erste Ausführungsform eines vorteilhaften Nickelkatalysators wird nachfolgend beschrieben. Dieser Katalysator enthält die Verbindungen $Ni_5MgAl_2O_9$ und $ZrO_2$ im Gewichtsverhältnis 13 : 1 und dazu einen Tonerdeschmelzzement, der 30% des gesamten Katalysatorgewichts ausmacht (Zusammensetzung des Tonerdeschmelzzements in Gew.-%: 26,4 CaO; 71,9 $Al_2O_3$; 0,2 $Fe_2O_3$; 0,2 MgO; 0,4 $Na_2O$; 0,07 $SiO_2$ und Spuren K, Cr, Cu, Mn, Ni sowie Pb.) Die Herstellung dieser ersten Ausführungsform

des vorteilhaften Katalysators geschieht wie folgt:

Zu der Suspension I wird innerhalb von 15 Minuten Lösung II hinzugefügt. Die Zusammensetzung der Suspension bzw. der Lösung ist folgende:

Suspension I:

| | |
|---|---|
| 1250 g | Soda in 6 l Wasser mit 37,5 g $ZrO_2$ |

Lösung II:

| | |
|---|---|
| 250 g | $Mg(NO_3)_2 \cdot 6\,H_2O$ |
| 1280 g | $Ni(NO_3)_2 \cdot 6\,H_2O$ |
| 690 g | $Al(NO_3)_3 \cdot 9\,H_2O$ in 6 l Wasser. |

Der entstehende Niederschlag wird abfiltriert, alkalifrei gewaschen, 12 Stunden bei 110°C getrocknet und anschließend 4 Stunden lang bei 400°C kalziniert. Die dabei erhaltene Röstmasse enthält somit Nickeloxid und Magnesiumoxid, Aluminiumoxid und Zirkondioxid als Trägerbestandteile. 350 g der Röstmasse werden mit 150 g Tonerdeschmelzzement trocken gemischt, mit 60 g Wasser versetzt, zu 5×5 mm Tabletten verpreßt, im Anschluß daran kurz gewässert und zum vollständigen Abbinden noch 6 Tage lang bei 40°C in einem geschlossenen System in feuchtem Zustand aufbewahrt. Danach erreichen die Tabletten eine Stirndruckfestigkeit von 464 kg/cm² und ein Schüttgewicht von 1,57 kg/l. Der Nickelgehalt, bezogen auf den oxidischen Zustand, liegt bei 28,7 Gew.-%. Vor seiner Verwendung wird der Katalysator noch reduziert, was mit Wasserstoff oder mit anderen reduzierenden Gasen geschehen kann.

Eine zweite Ausführungsform eines gut geeigneten Nickelkatalysators enthält die Verbindungen $Ni_5MgAl_2O_9$, $ZrO_2$ und $\alpha$-$Al_2O_3$ im Gewichtsverhältnis 12 : 1 : 2 und dazu den bereits erläuterten Tonerdeschmelzzement. Dieser Zement nimmt einen Anteil von 15% des gesamten Katalysatorgewichts ein. Diese zweite Katalysatorform wird auf folgende Weise hergestellt:

Die Lösungen I und II werden in der Suspension III bei einer Temperatur von 60°C kontinuierlich so vereinigt, daß der pH-Wert der Lösung nicht unter 8,5 abfällt. Die Zusammensetzung der Lösungen bzw. der Suspension ist folgende:

Lösung I:

| | |
|---|---|
| 1250 g | Soda in 6 l Wasser |

Lösung II:

| | |
|---|---|
| 255 g | $Mg(NO_3)_2 \cdot 6\,H_2O$ |
| 1280 g | $Ni(NO_3)_2 \cdot 6\,H_2O$ |
| 690 g | $Al(NO_3)_3 \cdot 6\,H_2O$ in 6 l Wasser |

Suspension III:

43,2 g Zirkondioxid und
74,0 g $\alpha$-$Al_2O_3$ in 3 l Wasser.

Der entstehende Niederschlag wird abfiltriert, gewaschen, der Filterkuchen 12 Stunden bei 110°C getrocknet und anschließend 4 Stunden bei 400° kalziniert.

400 g der so hergestellten Röstmasse werden mit 100 g Tonerdeschmelzzement trocken gemischt, mit 150 g Wasser versetzt und danach zu 3×3 mm Tabletten verpreßt. Die Tabletten werden kurz gewässert und 12 Stunden bei 110°C behandelt. Danach erreicht der Katalysator eine Stirndruckfestigkeit von 463 kp/cm² und ein Schüttgewicht von 1,53 kg/l. Der Nickelgehalt, bezogen auf den oxidischen Zustand, liegt bei 41,3 Gew.-%. Eine Reduktion schließt sich an.

Der für die zweite Reaktionszone zu verwendende Kupferkatalysator ist ein Fällungskatalysator, dem Zinkoxid und Vanadiumoxid als Promotoren und Stabilisatoren zugesetzt sind. Es ist vorteilhaft, einen Kupferkatalysator zu verwenden, der noch mindestens 10 Gew.-% Zink enthält. Ein solcher Kupferkatalysator läßt sich z. B. auf folgende Weise herstellen:

Man löst 1450 g $Cu(NO_3)_2 \cdot 3\,H_2O$ und 890 g $Zn(NO_3)_2 \cdot 6\,H_2O$ in 18 l Wasser sowie 140 g $NaVO_3 \cdot H_2O$ und 900 g $Na_2CO_3$ in ebenfalls 18 l Wasser. Man erhitzt beide Lösungen auf 80 bis 90°C und läßt dann die Nitratlösung unter starkem Rühren in die Soda-Vanadatlösung laufen. Der entstehende Niederschlag wird abgenutscht, mit insgesamt 100 l warmem Wasser gewaschen, bei 110°C getrocknet, dann 5 Stunden bei 300°C kalziniert und unter Zugabe von 2% Grafit zu Tabletten von 4×4 mm verpreßt. Dieser Katalysator enthält nach Reduktion der Oxide etwa 60 Gew.-% Kupfer, etwa 30 Gew.-% Zink und etwa 10 Gew.-% Vanadium. Im allgemeinen kann der Vanadiumgehalt zwischen 5 und 20 Gew.-% liegen.

Ein Beispiel für die Verfahrensführung wird mit Hilfe der Zeichnung erläutert.

Ein flüssiges Gemisch aus Methanol und Wasser fließt in der Leitung 1 durch einen Wärmeaustauscher 2 und dann durch einen weiteren Wärmeaustauscher 3. Das erwärmte Gemisch wird in der Leitung 4 zu einem gefeuerten Erhitzer 5 geführt und verläßt diesen dampfförmig durch die Leitung 6. 80 bis 95% dieses verdampften Einsatzgemisches werden durch die Leitung 7 dem Reaktor 8 aufgegeben. Der Reaktor enthält eine Schüttung eines Nickelkatalysators mit 25 bis 50 Gew.-% Nickel als aktiver Komponente. Durch die Umsetzung des dampfförmigen Gemisches aus Methanol und Wasserdampf an diesem Katalysator entsteht ein Produktgas, das Methan, Kohlenoxide und Wasserstoff sowie auch Wasserdampf enthält. Falls man den Reaktor adiabatisch betreibt, hat das Produktgas in der Leitung 9 eine höhere Temperatur als das Gemisch am Eintritt des Reaktors 8.

Das Produktgas der Leitung 9 gibt einen Teil seiner Wärme im Wärmeaustauscher 3 ab und verläßt diesen durch die Leitung 10 mit einer Temperatur etwa von 250 bis 350°C. Diesem Produktgas wird der Rest des Einsatzgemisches zugegeben, der in der Leitung 11 herangeführt wird. Die Umsetzung dieses Gemisches erfolgt

im Reaktor 12, der einen Kupferkatalysator mit etwa 40 bis 70 Gew.-% Kupfer enthält. Auch hier kann der Kupferkatalysator im Festbett angeordnet sein.

Das Stadtgas der gewünschten Qualität verläßt den Reaktor 12 durch die Leitung 13 und wird mit Hilfe des Wärmeaustauschers 2 gekühlt. Eine an sich bekannte weitere Kühlung und Trocknung des Gases kann sich anschließen, was jedoch in der Zeichnung nicht dargestellt ist.

Beispiel

In einer der Zeichnung entsprechenden Versuchsanlage werden pro Stunde 10 kg Methanol mit 10 kg Wasser gemischt und bei einem Druck von 30 bar in den Wärmeaustauschern 2 und 3 vorgewärmt und verdampft. Das Reaktionsgemisch wird im Überhitzer 5 auf 300°C überhitzt und dann in zwei Massenströme aufgeteilt. 90% des Reaktionsgemisches werden in einem adiabatisch betriebenen Schachtreaktor 8 an einem Nickelkatalysator umgesetzt. Dieser Katalysator enthält folgende Komponenten:

| | |
|---|---|
| NiO: | 36,9 Gew.-% (entsprechend 29,0 Gew.-% Ni) |
| $Al_2O_3$: | 27,2 Gew.-% |
| MgO: | 4,0 Gew.-% |
| CaO: | 6,3 Gew.-% |
| $ZrO_2$: | 3,9 Gew.-% |
| Glühverlust: | 21,7 Gew.-% |

Dieser Katalysator wird vor der Verwendung aktiviert und zu diesem Zwecke bei erhöhter Temperatur in reduzierender Atmosphäre in die metallische Form überführt.

Aufgrund der Reaktionswärme erhitzt sich die Katalysatorschicht auf 600°C. Es werden 22,6 m³/h feuchtes Produktgas folgender Zusammensetzung erzeugt:

| | |
|---|---|
| $CO_2$: | 23,0 Vol.-% |
| CO: | 2,7 Vol.-% |
| $H_2$: | 37,0 Vol.-% |
| $CH_4$: | 37,3 Vol.-% |
| $H_2O$-Gehalt: | 1,26 m³ pro m³ trockenes Gas |
| Heizwert: | 4755 kcal (= 19 900 kJ) pro m³ trockenes Gas |

Das Produktgas wird im Wärmeaustauscher 3 auf 290°C abgekühlt. Diesem abgekühlten Produktgas werden die noch nicht umgesetzten, restlichen 2,0 kg/h des Gemisches aus Methanol und Wasserdampf durch die Leitung 11 zugesetzt und das Reaktionsgemisch dem Reaktor 12 zugeführt.

Die Umsetzung im adiabatisch betriebenen Reaktor 12 erfolgt an einem Kupferkatalysator, der aus folgenden Komponenten hergestellt ist:

| | |
|---|---|
| CuO: | 52,8 Gew.-% |
| ZnO: | 26,4 Gew.-% |
| $V_2O_5$: | 8,8 Gew.-% |
| Glühverlust: | 12,0 Gew.-% |

Dieser Katalysator wird vor der Verwendung aktiviert und zu diesem Zwecke bei erhöhter Temperatur in reduzierender Atmosphäre in die metallische Form überführt.

Es werden 26,0 m³ feuchtes Produktgas pro Stunde mit folgender Zusammensetzung erzeugt:

| | |
|---|---|
| $CO_2$: | 24,9 Vol.-% |
| CO: | 0,2 Vol.-% |
| $H_2$: | 46,3 Vol.-% |
| $CH_4$: | 28,6 Vol.-% |
| $H_2O$-Gehalt: | 0,99 m³ pro m³ trockenes Gas |

Durch die endotherme Methanol-Spaltungsreaktion liegt die Austrittstemperatur des Gases in der Leitung 13 bei 260°C.

Das so erzeugte Stadtgas mit einem Heizwert von 4136 kcal (17 310 kJ) pro m³ trockenen Gases wird auf Umgebungstemperatur abgekühlt und gegebenenfalls noch getrocknet.

**Patentansprüche**

1. Verfahren zur Erzeugung eines Heizgases von Stadtgasqualität mit einem Brennwert von weniger als 18 000 kJ/Nm³ durch katalytische Umsetzung eines Einsatzgemisches, das Wasserdampf und Methanol im Gewichtsverhältnis von etwa 0,5 bis 1,5 enthält, unter einem Druck im Bereich von etwa 10 bis 50 bar, dadurch gekennzeichnet, daß man 80 bis 95% des Einsatzgemisches durch eine erste Reaktionszone bei Temperaturen von 300 bis 700°C leitet, die einen Nickelkatalysator mit 25 bis 50 Gew.-% Nickel als aktiver Komponente enthält, und der Rest des Einsatzgemisches zusammen mit dem Produktgas der ersten Reaktionszone durch eine zweite Reaktionszone bei Temperaturen von 200 bis 400°C geleitet wird, die einen Kupferkatalysator mit etwa 40 bis 70 Gew.-% Kupfer enthält, wobei das die zweite Reaktionszone verlassende Produktgas einen etwas niedrigeren Brennwert als das Produktgas der ersten Reaktionszone besitzt.

2. Verfahren nach Anspruch 1, dadurch gekennzeichnet, daß zumindest der durch die erste Reaktionszone zu leitende Teil des Einsatzgemisches aus den kalten Komponenten Methanol und Wasser gemischt und durch Wärmeaustausch auf etwa 300 bis 500°C erhitzt wird, bevor er in die erste Reaktionszone geleitet wird.

3. Verfahren nach Anspruch 1 oder 2, dadurch gekennzeichnet, daß das Produktgas der ersten Reaktionszone auf Temperaturen von etwa 250 bis 350°C gekühlt wird, bevor man es mit dem Rest des Einsatzgemisches mischt.

4. Verfahren nach Anspruch 1 oder einem der folgenden, dadurch gekennzeichnet, daß der Nickelkatalysator der ersten Reaktionszone mindestens 5 Gew.-% Tonerdeschmelzzement und

mindestens 5 Gew.-% Zirkondioxid oder Titandioxid enthält.

5. Verfahren nach Anspruch 1 oder einem der folgenden, dadurch gekennzeichnet, daß der Kupferkatalysator der zweiten Reaktionszone mindestens 10 Gew.-% Zink enthält.

**Claims**

1. A process of producing a fuel gas of town-gas-grade having a calorific value below 18.000 kJ/standard $m^3$ by a catalytic reaction of a mixed feedstock containing methanol and water vapor at a weight ratio of about 0.5 to 1.5 under a pressure in the range of about 10 to 50 bars, characterized in that 80 to 95% of the mixed feedstock is passed at temperatures of 300 to 700°C through a first reaction zone which contains a nickel catalyst with 25 to 50% nickel by weight as the active component, and the remainder of the mixed feedstock together with the effluent gas from the first reaction zone is passed at temperatures of 200 to 400°C through a second reaction zone containing a copper catalyst that contains about 40 to 70% copper by weight, the product gas leaving the second reaction zone has a somewhat lower calorific value than the effluent gas from the first reaction zone.

2. A process according to claim 1, characterized in that at least the portion of the mixes feedstock which ist to be passed through the first reaction zone is composed by mixing the cold components methanol and water, and the mixture is heated by a heat exchange to about 300 to 500°C before said portion enters the first reaction zone.

3. A process according to claim 1 or 2, characterized in that the effluent gas from the first reaction zone is cooled to temperatures of about 250 to 350°C before it is mixed with the remainder of the mixed feedstock.

4. A process according to claim 1 or any of the following claims, characterized in that the nickel catalyst in the first reaction zone contains at least 5% high-alumina cement and at least 5% zirconium dioxide or titanium dioxide by weight.

5. A process according to claim 1 or any of the following claims, characterized in that the copper catalyst in the second reaction zone contains at least 10% zinc by weight.

**Revendications**

1. Procédé d'obtention d'un gaz de chauffage ayant la qualité du gaz de ville et ayant un pouvoir calorifique inférieur à 18 000 kJ/$m^3$ normal, par réaction catalytique d'un mélange de charge qui contient de la vapeur d'eau et du méthanol en le rapport pondéral de 0,5 à 1,5 environ, sous une pression comprise entre 10 et 50 bars environ, caractérisé en ce qu'il consiste à envoyer de 80 à 95% du mélange de charge dans une première zone de réaction à des températures de 300 à 700°C, qui contient un catalyseur au nickel ayant de 25 à 50% en poids de nickel comme constituant actif, et à envoyer le reste du mélange de charge, en même temps que le gaz produit provenant de la première zone de réaction, dans une seconde zone de réaction à des températures de 200 à 400°C qui contient un catalyseur au cuivre ayant de 40 à 70% environ en poids de cuivre, la gaz produit quittant la seconde zone de réaction ayant un pouvoir calorifique un peu inférieur au gaz produit provenant de la première zone de réaction.

2. Procédé suivant la revendication 1, caractérisé en ce qu'il consiste à mélanger au moins la partie du mélange de charge constituée des constituants froids que sont le méthanol et l'eau, à envoyer dans la première zone de réaction et à le réchauffer par échange de chaleur jusqu'à 300 à 500°C environ avant de l'envoyer dans la première zone de réaction.

3. Procédé suivant la revendication 1 ou 2, caractérisé en ce qu'il consiste à refroidir le gaz produit provenant de la première zone de réaction à des températures de 250 à 350°C environ, avant de le mélanger au reste du mélange de charge.

4. Procédé suivant la revendication 1 ou l'une des suivantes, caractérisé en ce que le catalyseur au nickel de la première zone de réaction contient au moins 5% en poids de ciment fondu à l'alumine et au moins 5% en poids de dioxyde de zirconium ou de dioxyde de titane.

5. Procédé suivant la revendication 1 ou l'une des suivantes, caractérisé en ce que le catalyseur au cuivre de la seconde zone de réaction contient au moins 10% en poids de zinc.

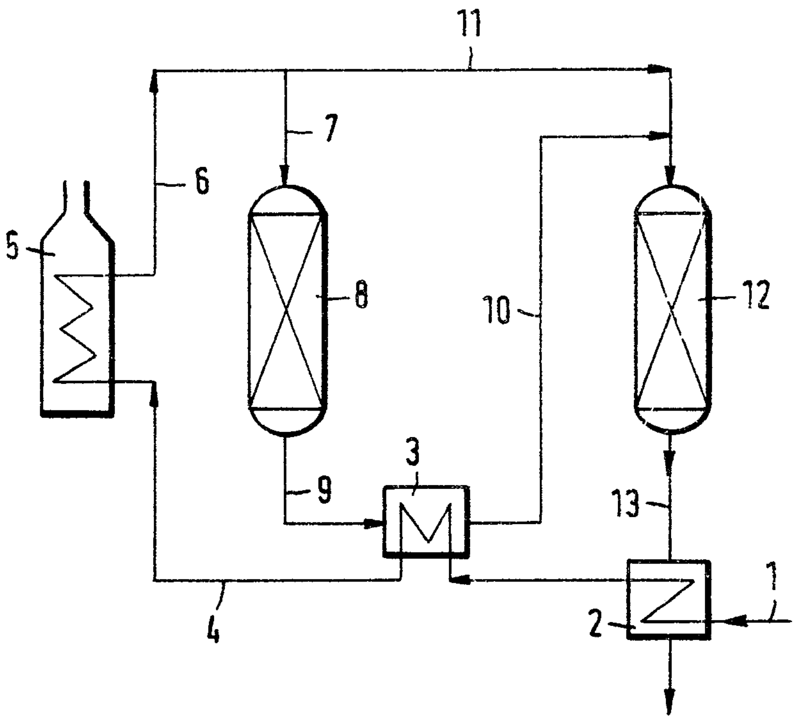
11
7
6
5
8
10
12
3
9
13
1
2
4